# EUROPÄISCHE PATENTSCHRIFT

(11) **EP 4 136 048 B1**
(45) Veröffentlichungstag und Bekanntmachung des Hinweises auf die Patenterteilung: **05.06.2024**
(21) Anmeldenummer: 21726620.4
(22) Anmeldetag: 12.05.2021
(51) Int. Cl.: F16G 15/08

(54) **ANSCHLAGPUNKT**
ATTACHMENT POINT
POINT DE FIXATION

(30) Priorität: 27.05.2020 DE 202020103028 U
(43) Veröffentlichungstag der Anmeldung: 22.02.2023
(73) Patentinhaber: J.D. Theile GmbH & Co. KG, D-58239 Schwerte (DE)
(72) Erfinder: MÜER, Bernd, 58239 Schwerte (DE)
(74) Vertreter: Haverkamp Patentanwälte PartG mbB
(86) Internationale Anmeldenummer: PCT/EP2021/062669
(87) Internationale Veröffentlichungsnummer: WO 2021/239470

(56) Entgegenhaltungen:
- DE-U1-202005 019 357
- DE-U1-202015 104 747
- DE-U1-202016 006 871

## Beschreibung

Die Erfindung betrifft einen Anschlagpunkt zum Festlegen an einem festzulegenden oder handzuhabenden Gegenstand, umfassend ein ein Anschlussmittel aufweisendes Unterteil zum Anschließen des Anschlagpunktes an einen festzulegenden und/oder handzuhabenden Gegenstand mit einer Lagerbuchse und umfassend ein gegenüber dem Unterteil drehbares, mit einem Lagerabschnitt in die Lagerbuchse des Unterteils eingreifendes Oberteil.

Derartige Anschlagpunkte werden typischerweise zum Heben von Gegenständen verwendet. Angeschlossen werden die Anschlagpunkte mit ihrem Anschlussmittel, typischerweise als Schraubbolzen ausgeführt, an den zu hebenden oder festzulegenden Gegenstand. In vielen Fällen ist ein solcher Anschlagpunkt ausgelegt, damit bei Anliegen einer durch ein in die Anschlussöse eingehängtes Hebezeug sich die Anschlussöse entsprechend der darauf wirkenden Zugrichtung ausrichtet. Bei einem solchen Anschlusspunkt ist der den Ösenbogen tragende Grundkörper als Oberteil ausgebildet, das gegenüber einem das oder die Anschlussmittel tragenden Unterteil drehbar ist. Dieselben Eigenschaften werden auch bei einem Anschlagpunkt gewünscht, wenn dieser zum Verzurren eines Gegenstandes eingesetzt wird, grundsätzlich auch, wenn der Anschlagpunkt nicht als Anschlagwirbel mit einem gegenüber dem Unterteil drehbaren Oberteil ausgeführt ist.

Mitunter werden derartige Anschlagpunkte auch eingesetzt, um eine Zugkraft anzulegen, die quer zur Längserstreckung des Anschlagpunktes gerichtet ist. Um die Winkellage der Anschlussöse abschätzen bzw. erfassen zu können, sind bei dem aus DE 10 2006 052 986 B4 vorbekannten Anschlusspunkt auf der Außenseite des Ösengliedes des Oberteils Markierungen angebracht. Die innenseitig von der Anschlussöse abragenden Teilungselemente stellen hierzu die komplementären Zeiger dar. Eine maximale Querkraft wird in das Oberteil des Anschlagpunktes eingeleitet, wenn diese in Querrichtung zur Längserstreckung des Anschlagpunktes anliegt, also in der sogenannten 90°-Stellung gegenüber der Längsachse des Anschlagpunktes. Dieser vorbekannte Anschlagpunkt vermag zwar bereits hohen Querkräften standzuhalten. Es wäre jedoch wünschenswert, wenn die Querkraftbelastbarkeit eines solchen Anschlagpunktes verbessert werden könnte, insbesondere mit einfachen Mitteln.

Aus DE 20 2005 019 357 U1 ist ein als Anschlagwirbel ausgelegter Anschlagpunkt bekannt. Bei diesem ist der Bewegungsspalt zwischen dem Oberteil und dem Unterteil verblendet, um ein Eindringen von Verschmutzungen zu vermeiden. Erreicht wird dieses durch eine den axialen Spalt zwischen dem Oberteil und dem Unterteil verblendende Spaltblende. Deren Höhe entspricht der Höhe der verschleißbedingten maximal zugelassenen Spaltweite zwischen Oberteil und Unterteil. Ist zwischen den beiden Teilen trotz Spaltblende ein Spalt sichtbar, ist der Anschlagwirbel ablegereif. In einer der möglichen Ausgestaltungen ist die Spaltverblendung als Labyrinth ausgeführt.

Auch bei dem aus DE 20 2016 906 871 U1 bekannten Anschlusspunkt ist somit zwischen dem Oberteil und dem Unterteil eine Labyrinthdichtung vorgesehen, um einen Eintrag von Verschmutzungen zu den in radialer Richtung wirkenden Wälzkörpern zu unterbinden. Die Flanken dieses und der anderen vorbekannten Labyrinthdichtungsvorsprünge und dementsprechend auch die Wände der Labyrinthdichtungsnuten sind gerade ausgeführt.

Bei dem aus DE 20 2005 019 357 U1 vorbekannten Anschlagwirbel ist der in die Lagerbuchse des Unterteils eingreifende Lagerabschnitt des Oberteils an der Sohle der Lagerbuchse durch eine zentrisch angeordnete Kugel abgestützt. In radialer Richtung ist das Oberteil durch ein Kugellager gegenüber der Innenwandung des Unterteils gelagert. Diese Kugeln dienen zugleich zur Verriegelung des Oberteils gegenüber dem Unterteil in axialer Richtung. Das Unterteil verfügt zu diesem Zweck über einen Kugelzuführkanal, in den die für dieses radiale Wälzlager benötigten Kugeln als Wälzkörper in die sich ergänzenden Halbnuten der Innenwandung der Lagerbuchse des Unterteils und der Mantelfläche des Lagerabschnitts des Oberteils eingebracht werden können. Dieses Dokument offenbart den Oberbegriff von Anspruch 1.

Um die gewünschte Drehbarkeit des Oberteils gegenüber dem Unterteil zu gewährleisten, ist ein gewisses Bewegungsspiel an den für die Lagerung des Oberteils an dem Unterteil relevanten Bereichen - den Lagerpartnern - erforderlich. Ein solcher Anschlagpunkt soll auch hohen Querkräften genügen, mithin Kräften, die insgesamt oder anteilig quer zur Drehachse des Oberteils gegenüber dem Unterteil am Oberteil anliegen. Zudem ist gewünscht, dass sich auch bei einem ungünstigen Querkraftangriff das Oberteil in Richtung der anliegenden Zugkraft ausrichtet. Bei den vorbekannten Anschlusspunkten hat sich gezeigt, dass bei einem solchen Querkraftangriff die Drehbarkeit des Oberteils gegenüber dem Unterteil herabgesetzt und bei entsprechend hohem Kraftangriff auch blockiert sein kann. Zurückgeführt wird dieses auf ein Verkanten der Labyrinthdichtungspartner infolge einer solchen querkraftbedingten Verkippung des Oberteils gegenüber dem Unterteil. Diesem könnte dadurch begegnet werden, dass der Dichtungsspalt größer bemessen wird. Eine solche Maßnahme hat jedoch zum Nachteil, dass dieses der durch die Labyrinthdichtung bewirkten Dichtfunktionalität zuwiderläuft.

Vor dem vorstehend skizzierten Hintergrund liegt der Erfindung daher die Aufgabe zugrunde, einen Anschlagpunkt der eingangs genannten Art dergestalt weiterzubilden, dass dieser in Bezug auf eine Querkraftbelastbarkeit verbessert ist.

Gelöst wird diese Aufgabe erfindungsgemäß zum einen durch einen eingangs genannten, gattungsgemäßen Anschlagpunkt, bei dem das Oberteil mit seinem radial äußeren Randbereich die Oberseite des Unterteils überkragt und zwischen dem das Unterteil übergreifenden Randbereich des Oberteils und dem Unterteil eine Labyrinthdichtung durch einen am Oberteil angeformten, in eine unterteilseitige Labyrinthnut eingreifenden Labyrinthvorsprung ausgebildet ist, wobei zumindest die äußere Wand der Labyrinthnut und die äußere Flanke des Labyrinthvorsprunges in denjenigen Abschnitten ihrer Ineingriffstellung komplementär zueinander gekrümmt sind, in denen die beiden Teile - Oberteil und Unterteil - bei einer Querlastbeanspruchung des Anschlagpunktes infolge einer Verkippung des Oberteils gegenüber dem Unterteil miteinander in Kontakt treten können.

Bei dem Anschlagpunkt gemäß dem ersten Lösungsvorschlag sind die im Falle einer Kippung des Oberteils gegenüber dem Unterteil in Kontakt tretenden Abschnitte der Labyrinthdichtungspartner komplementär zueinander gekrümmt ausgeführt. Durch diese Maßnahme entsteht im Falle einer Kippung des Oberteils gegenüber dem Unterteil eine eher flächige Anlage der Labyrinthdichtungspartner in demjenigen Abschnitt, in dem diese bei einer Querkraftbelastung des Anschlagpunktes in Kontakt gebracht werden. Die Krafteinleitung in einem solchen Fall von dem Oberteil in das Unterteil erfolgt daher über diesen Kontaktflächenabschnitt, wodurch einer Kerbwirkung innerhalb der Labyrinthnut des Unterteils wirksam entgegengewirkt ist. Dieses kann daher entsprechend höhere Querkräfte aufnehmen, ohne auszureißen. Zugleich bleibt die Drehbarkeit des Oberteils gegenüber dem Unterteil in hinreichendem Maße erhalten, da diese nicht durch punkt- oder linienförmige Kraftspitzen, wie dieses beim Stand der Technik der Fall ist, stark herabgesetzt oder gar blockiert ist. Bei diesem Anschlagpunkt kann das Spaltmaß der Labyrinthdichtung aufgrund der besonderen Auslegung der zusammenwirkenden Konturen der Labyrinthdichtungspartner hinreichend klein ausgelegt sein, um wirksam einem Eindringen von Verunreinigungen an die Lagerpartner zwischen Oberteil und Unterteil zu verhindern bzw. auf ein tolerables Maß zu reduzieren.

Im Unterschied zu vorbekannten Anschlagpunkten wird bei diesem Anschlagpunkt eine gewisse Verkippung des Oberteils gegenüber dem Unterteil bei einer Querkraftbelastung in Kauf genommen und genutzt, um über den Kontaktflächenbereich zwischen den beiden Labyrinthdichtungspartnern bei entsprechender Querkraftbelastung eine zusätzliche Abstützung des Oberteils gegenüber dem Unterteil zu bewirken, ohne jedoch die Wirbeleigenschaft des Anschlagpunktes zu beeinträchtigen.

Vorzugsweise ist die Querschnittsfläche der Labyrinthnut insgesamt gekrümmt und nicht nur im Bereich der möglichen Kontaktfläche mit dem Labyrinthvorsprung des Oberteils. Hierdurch ist einer Kerbwirkung innerhalb der Labyrinthnut nochmals entgegengewirkt.

Typischerweise ist der Labyrinthvorsprung des Oberteils konvex und die Labyrinthnut des Unterteils konkav ausgeführt. Der Krümmungsradius ist gemäß einer Ausgestaltung jeweils konstant. Gemäß einer Ausgestaltung ist der Krümmungsradius der Labyrinthnut nur geringfügig größer als der Krümmungsradius des Labyrinthvorsprunges, um das gewünschte Bewegungsspiel bei einer axialen Belastung des Anschlagpunktes bereitzustellen. In einer anderen Ausgestaltung ist vorgesehen, dass der Krümmungsradius des konvex ausgeführten Labyrinthdichtungspartners in dem möglichen Kontaktbereich um wenige Grade größer ausgeführt ist als der Krümmungsradius des komplementären konvexen Abschnittes des anderen Labyrinthdichtungspartners. Im Falle eines Kontaktes zwischen Oberteil und Unterteil bei einer Querkraftbelastung wird von dem Oberteil die Querkraft in zwei Kontaktbereichen in das Unterteil eingeleitet, sodass auch durch eine solche Maßnahme die Querkraftbelastbarkeit des Anschlusspunktes deutlich erhöht ist.

In einer Weiterbildung ist der in die Lagerbuchse eingreifende Lagerabschnitt des Oberteils mit radialem Abstand zur Drehachse des Oberteils gegenüber dem Unterteil an der Sohle der Lagerbuchse auf einem Lager abgestützt. Im Falle einer Querkraftbeanspruchung des Oberteils ist dieses daher im Bereich des Fußes seines zylindrischen Lagerabschnittes auf dem Lagerkörper abgestützt. Damit ist der Verkippbetrag, mit dem das Oberteil gegenüber dem Unterteil bei einer Querlastbeanspruchung verkippt werden kann, auch durch diese Maßnahme begrenzt. Es versteht sich, dass die Abstützung des in die Lagerbuchse des Unterteils eingreifenden Lagerabschnitts des Oberteils zusammenwirkt mit der radialen Lagerung der beiden Teile gegeneinander, typischerweise einem Wälzlager, beispielsweise als Kugellager ausgeführt. Zugleich bleibt die Wirbelfunktionalität des Anschlagpunktes auch in einem solchen Fall erhalten.

Ein solches Lager kann als Wälzlager ausgeführt sein. Als Wälzkörper für ein solches Wälzlager eignen sich Zylinderkörper, sodass dieses Wälzlager als Nadellager ausgeführt ist.

Gemäß einer anderen Ausgestaltung ist eine Lagerscheibe als Lagerkörper vorgesehen, auf der der Lagerabschnitt des Oberteils gegenüber der Sohle der Lagerbuchse des Unterteils abgestützt ist.

Zusätzlich kann der Fuß des Lagerabschnittes des Oberteils an der Sohle der Lagerbuchse des Unterteils durch eine zentrisch angeordnete Stützkugel abgestützt sein.

Nachfolgend ist die Erfindung anhand eines Ausführungsbeispiels unter Bezugnahme auf die beigefügten Figuren beschrieben. Es zeigen:
- **Fig. 1:**: eine Seitenansicht eines erfindungsgemäßen Anschlagpunktes,
- **Fig. 2:**: einen Querschnitt durch den Anschlagpunkt der Figur 1 entlang der Linie A-B,
- **Fig. 3:**: eine Draufsicht auf das Unterteil des Anschlagpunktes der Figur 1 mit herausgenommenem Oberteil,
- **Fig. 4:**: eine Teillängsschnittdarstellung durch den oberen Abschluss des Unterteils und den unteren Abschnitt des Oberteils in Normalstellung von Oberteil und Unterteil zueinander und
- **Fig. 5:**: eine Teillängsschnittdarstellung des Anschlagpunktes der Figur 1 mit dem mit seinem Lagerabschnitt in die Lagerbuchse des Unterteils eingreifenden Oberteil bei einer Querkraftbeanspruchung.

Ein Anschlagpunkt 1 dient zum Anschluss an einen Gegenstand, damit dieser gehandhabt werden kann, das heißt: Je nach Anwendung angehoben, festgezurrt oder dergleichen. Der Anschlagpunkt 1 verfügt über ein Unterteil 2 und ein Oberteil 3. Das Oberteil 3 ist gegenüber dem Unterteil 2 drehbar gelagert. An das Unterteil ist ein Schraubbolzen 4 angeschlossen, dessen Gewindeabschnitt 5 zum Anschließen des Anschlagpunktes 1 an einen handzuhabenden Gegenstand dient, indem dieser in eine entsprechend vorbereitete Innengewindebohrung des Gegenstandes eingeschraubt wird. Das Oberteil 3 trägt ein Ösenglied 6, der zusammen mit einem Teil des Grundkörpers 7 des Oberteils 3 eine Öse bildet. In das Ösenglied 6 ist eine Anschlussöse 8 eingehängt. Die Anschlussöse 8 dient dem Zweck, daran ein Hebe- oder Zurrmittel, wie beispielsweise ein Kranhaken, ein Seil, ein Gurt oder dergleichen anzuschließen. Die Anschlussöse 8 ist asymmetrisch bezüglich ihrer Längserstreckung ausgeführt und verfügt über einen ersten Bogen 9 mit größerem Radius und einen zweiten Bogen 10 mit kleinerem Radius. Die Anschlussöse 8 ist mit ihrem Bogen 10 mit kleinerem Radius in den Ösenbogen 6 des Oberteils 3 eingehängt und kann an diesem scharnieren. Die die beiden Bögen 9, 10 verbindenden Schenkel 11, 11.1 sind bei dem dargestellten Ausführungsbeispiel gerade ausgeführt und gegeneinander geneigt, wodurch der durch die Anschlussöse 8 eingefasste Innenraum sich in Richtung zu dem Bogen 10 hin verjüngt.

Der obere Abschluss des Unterteils trägt 2 einen umlaufenden, in radialer Richtung vorspringenden und damit auskragenden Ringflansch 12. Dieser weist eine kreisrunde äußere Umrissgeometrie auf. Der Durchmesser des Ringflansches 12 entspricht bei dem dargestellten Ausführungsbeispiel dem Durchmesser des unteren Anlageflansches 13 des Unterteils 2, der mit seiner Unterseite 14 gegenüber der Oberfläche eines handzuhabenden Gegenstandes verspannt wird. Die Materialstärke des Ringflansches 12 ist bei dem dargestellten Ausführungsbeispiel etwas geringer als diejenige des Anlageflansches, beträgt etwa 80 % der Materialstärke des Anlageflansches 13. Zum Anschließen des Unterteils 2 an einem handzuhabenden Gegenstand weist dessen radial äußere Mantelfläche Schlüsselflächen 15 auf. Diese sind bei dem dargestellten Ausführungsbeispiel nach Art einer Sechskantmutter angeordnet. Der Ringflansch 12 überkragt die Schlüsselflächen 15 in radialer Richtung, sodass durch diese Maßnahme nicht nur eine wirksame Ausrisssicherung für das Oberteil 3 bereitgestellt ist, sondern zugleich eine wirksame Abrutschsicherung für ein Werkzeug, typischerweise ein Maulschlüssel, mit dem das Unterteil 2 des Anschlagpunktes 1 mit einem handzuhabenden Gegenstand verspannt wird. Bei dem dargestellten Ausführungsbeispiels ragt der Ringflansch 12 in radialer Richtung auch über die gerundet ausgeführten Kantenabschnitte 16 in radialer Richtung ab, mit denen zwei benachbarte, winklig zueinander angeordnete Schlüsselflächen 15 verbunden sind. Bei dem dargestellten Ausführungsbeispiel sind der Durchmesser des Ringflansches 12 und derjenige des Anlageflansches 13 gleich.

Das Unterteil 2 des Anschlagpunktes 1 ist als Schmiedeteil hergestellt, wobei durch den Schmiedevorgang das Unterteil 2 eines in seiner Längsrichtung unstrukturierte Mantelfläche aufweist. Die Schlüsselflächenkontur ist durch eine Fräsbearbeitung in das Unterteil eingebracht worden.

Durch den Ringflansch 12 weist das Unterteil 2 an seinem zu dem Oberteil 3 weisenden Abschluss umlaufend in radialer Richtung eine gleiche Materialstärke auf. Durch diese Maßnahme ist das Unterteil 2 durch die außenseitig angeordneten Schlüsselflächen 15 nicht geschwächt. Der Ringflansch 12 hat somit neben der Funktion der vorbeschriebenen Abrutschsicherung ebenfalls eine Verstärkungsfunktion.

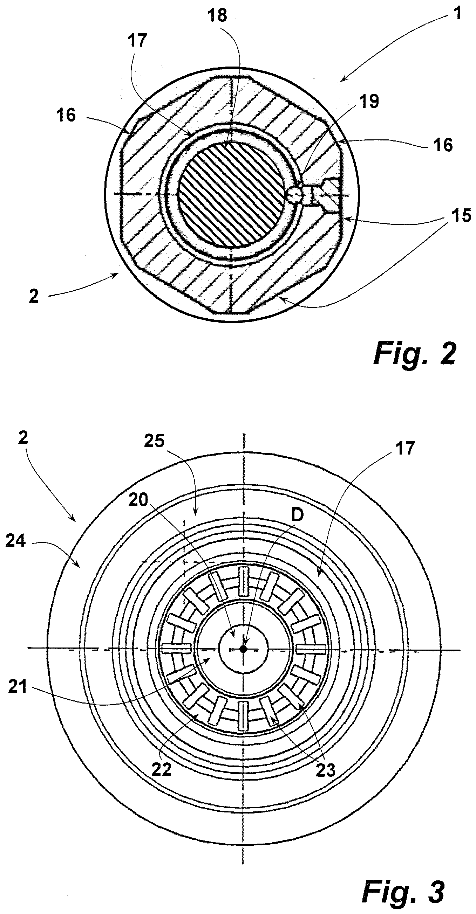

In dem in Figur 2 gezeigten Querschnitt des Anschlagpunktes 1 ist die Anschlussöse 8 nicht gezeigt. Deutlich erkennbar ist aus dieser Querschnittsdarstellung, wie der Ringflansch 12 die Schlüsselflächen 15 und bei diesem Ausführungsbeispiel auch die benachbarte Schlüsselflächen 15 verbindenden Kantenabschnitte 16 überkragt. Erkennbar ist in der Schnittdarstellung der Figur 2 zudem die Lagerbuchse 17 des Unterteils 2 sowie der darin eingreifende Lagerabschnitt 18 des Oberteils 3. Das Oberteil 3 ist gegenüber dem Unterteil 2 über ein Kugellager verbunden und auf diese Weise auch gelagert. In dieser Figur ist der Einfachheit halber nur eine der in die sich ergänzenden Kugellagernuten umlaufend angeordneten Kugeln 19 gezeigt.

Diese Schnittdarstellung verdeutlicht, dass ein an den Anschlagpunkt 1 angesetztes Werkzeug in axialer Richtung von den Schlüsselflächen 15 nicht abrutschen kann.

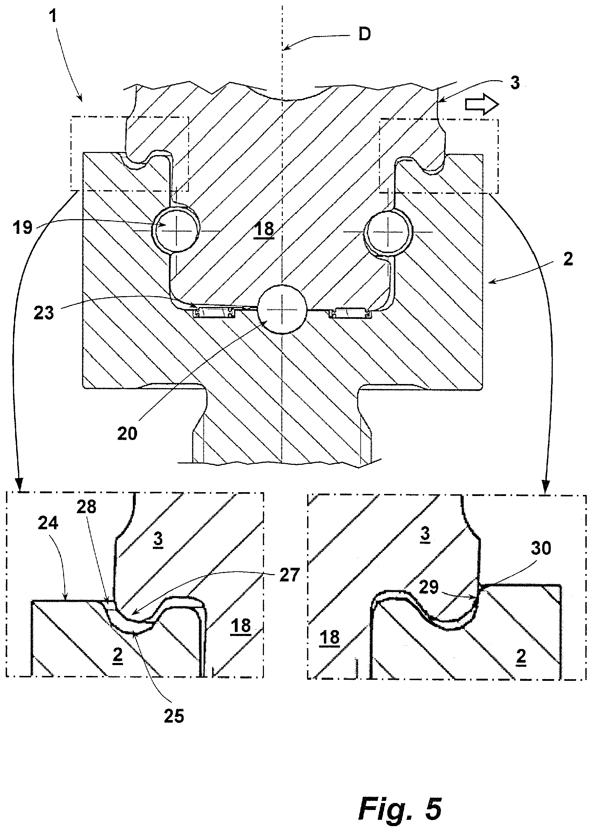

Figur 3 zeigt eine Einsicht in die Lagerbuchse 17 des Unterteils 2 bei abgenommenen Oberteil 3. In der Lagerbuchse 17 ist zentrisch eine Stützkugel 20 angeordnet, auf der der zylindrische Lagerabschnitt 18 des Oberteils 3 mit seinem Fuß und somit mit seiner Unterseite aufsitzt und somit daran abgestützt ist. Die Kugel 20 greift in eine entsprechende Kugelausnehmung des Lagerabschnittes 18 sowie der Sohle 21 der Lagerbuchse 17 ein (siehe Figur 5). Auf der Sohle 21 der Lagerbuchse 17 befindet sich ein ringförmiges Nadellager 22, dessen zylindrische Wälzkörper 23 sternartig bzw. planetenartig die Drehachse D des Oberteils 3 gegenüber dem Unterteil 2 umgeben. Die Wälzkörper 23 sind in einem Wälzkörperlagerkäfig gehalten. Das Nadellager 22 ist in einer in die Sohle 21 eingebrachte Ringnut angeordnet und ragt mit seinen Wälzkörpern 23 nur so weit aus dieser Ringnut heraus, wie dieses für die Lagerung des Lagerabschnittes 18 erforderlich ist.

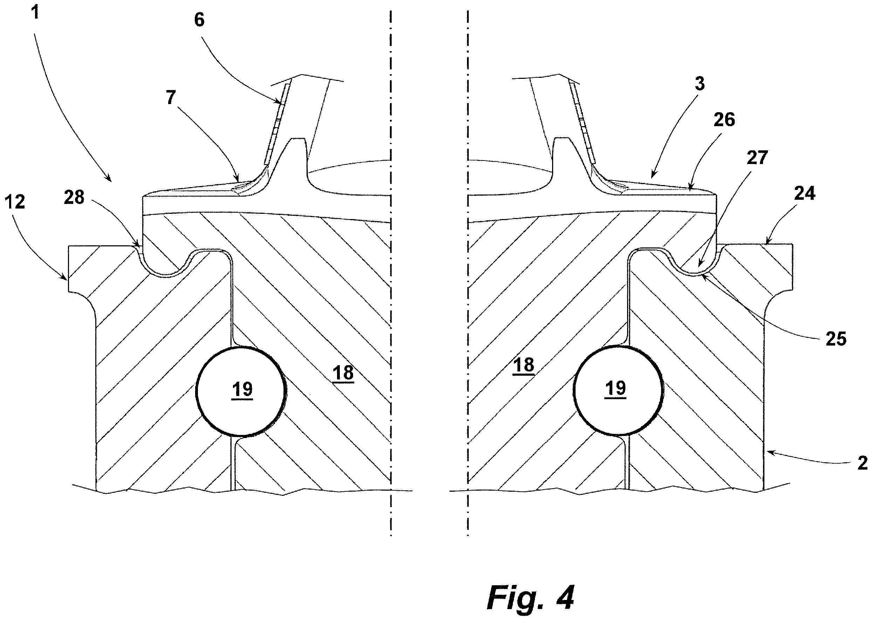

In die Oberseite 24 des Unterteils 2 ist eine umlaufende Labyrinthnut 25 eingebracht. Diese ist im Querschnitt in der Darstellung des Anschlagpunktes 1 der Figur 4 erkennbar. Der Querschnittsverlauf der Labyrinthnut 25 ist mit konstantem Radius gekrümmt, zumindest sein wesentlicher Abschnitt. Das Oberteil 3 überkragt die Oberseite 24 des Unterteils 2. In diesem überkragenden Randbereich 26 ist an das Oberteil 3 nach unten abragend ein Labyrinthvorsprung 27 angeordnet. Seine in die Labyrinthnut 25 eingreifende Kontur ist ebenfalls mit konstantem Radius gekrümmt. Der Krümmungsradius des Labyrinthvorsprunges 7 ist, um den in Figur 4 erkennbaren Bewegungsabstand zwischen dem Unterteil 2 und dem Oberteil 3 in axialer Richtung zu gewährleisten, etwas geringer als derjenige der Labyrinthnut 25. Wie aus der Schnittdarstellung der Figur 4 erkennbar, ist auf diese Weise eine in radialer Richtung wirkende Labyrinthdichtung bereitgestellt, um einen Verunreinigungseintrag in die Lagerbuchse 17 und die durch die Kugeln 19 bewirkte Lagerung des Lagerabschnittes 18 der Oberteils 3 an der Innenwand der Lagerbuchse 17 des Unterteils 2 nicht zu beeinträchtigen.

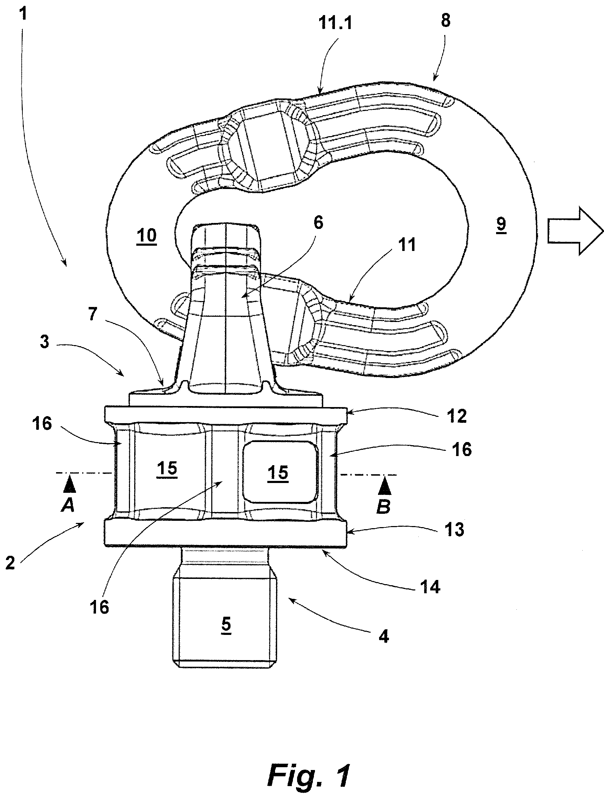

In Figur 4 ist der Anschlagpunkt 1 mit seinem Oberteil 3 und seinem Unterteil 2 in seiner Normalstellung gezeigt. In dieser befindet sich das Oberteil 3 gegenüber dem Unterteil 2 beispielsweise bei Anliegen einer axialen über die Anschlussöse 8 auf das Oberteil 3 wirkenden Zugkraft. Figur 5 zeigt den Anschlusspunkt 1 in einem Teillängsschnitt, in dem auch die unterseitige Abstützung des Lagerabschnittes 18 an den Wälzkörpern 23 an der Sohle 21 des Unterteils 2 ebenso erkennbar ist, wie die Abstützung über die Stützkugel 20. Figur 5 zeigt den Anschlagpunkt 1 bei einer darauf einwirkenden Querkraft, wie in Figur 1 durch den Blockpfeil kenntlich gemacht. Diese Kraft greift in einem Winkel von etwa 90° zur Drehachse D des Oberteils 3 an. Infolge des notwendigen Bewegungsspiels zwischen Oberteil 3 und Unterteil 2 wird bei entsprechender Kraftbeaufschlagung das Oberteil 3 gegenüber dem Unterteil 2 verkippt. Diese Situation ist in Figur 5 dargestellt. Während an der zugkraftabgewandten Seite durch das Verkippen der Labyrinthspalt 28 vergrößert wird, wird dieser auf der zugkraftzugewandten Seite verringert, sodass es zu einer Anlage zwischen den gekrümmten Oberflächen von Labyrinthvorsprung 27 und Labyrinthnut 25 kommt. Dieses erfolgt infolge der durch den Blockpfeil in Figur 5 gekennzeichneten Kipprichtung an der radial äußeren Wand 29 der Labyrinthnut 25 und der radial äußeren Flanke 30 des Labyrinthvorsprunges 27 des Oberteils 3. Besonders gut ist das Vorstehende in den in Figur 5 jeweils gezeigten Ausschnittsvergrößerungen erkennbar. Aufgrund der vorbeschriebenen Kontur der beiden Labyrinthdichtungspartner - dem Labyrinthvorsprung 27 und der Labyrinthnut 25 - vor allem an ihren radial äußeren Abschnitten sind beide Teile - Unterteil 2 und Oberteil 3 - in einen flächigen Kontakt zueinander gestellt. Dieses verhindert die Entstehung von Kerbwirkungen innerhalb der Labyrinthnut 25 sowie ein Blockieren der Drehbewegung des Oberteils 3 gegenüber dem Unterteil 2. Daher richtet sich das Oberteil 3 auch bei derartigen Beanspruchungen ohne weiteres in Richtung der anliegenden Zuglast aus.

Untersuchungen haben gezeigt, dass der Anschlusspunkt 1 gegenüber baugleichen Anschlusspunkten mit einer herkömmlichen Labyrinthdichtung, bei der die Dichtungspartner gerade Seitenflächen aufweisen, und ohne das in die Sohle 21 der Lagerbuchse 17 integrierte Nadellager 22 etwa 10 % höheren Querkräften standhält. Zudem wurde festgestellt, dass der Verschleiß in bzw. an den Lagerpartnern signifikant reduziert werden konnte, mithin ein solcher Anschlagpunkt 1 deutlich länger eingesetzt werden konnte, bevor dieser ablegereif war.

Die Ausrissbeständigkeit des Anschlagpunktes 1 wird bei dem dargestellten Ausführungsbeispiel zusätzlich durch den Ringflansch 12 unterstützt. Durch die Kombination der einzelnen beschriebenen Maßnahmen kann ein solcher Anschlagpunkt 1 auch Querkräften standhalten, die durchaus auch mehr als 10 % höher sind, verglichen mit einem gleich dimensionierten Anschlagpunkt ohne die beschriebenen Merkmale.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen dargelegt werden müsste.

**Bezugszeichenliste**

| | | | |
|---|---|---|---|
| 1 | Anschlagpunkt | D | Drehachse |
| 2 | Unterteil | | |
| 3 | Oberteil | | |
| 4 | Schraubbolzen | | |
| 5 | Gewindeabschnitt | | |
| 6 | Ösenglied | | |
| 7 | Grundkörper | | |
| 8 | Anschlussöse | | |
| 9 | Bogen | | |
| 10 | Bogen | | |
| 11 | Schenkel | | |
| 12 | Ringflansch | | |
| 13 | Anlageflansch | | |
| 14 | Unterseite | | |
| 15 | Schlüsselfläche | | |
| 16 | Kantenabschnitt | | |
| 17 | Lagerbuchse | | |
| 18 | Lagerabschnitt | | |
| 19 | Kugel | | |
| 20 | Stützkugel | | |
| 21 | Sohle | | |
| 22 | Nadellager | | |
| 23 | Wälzkörper | | |
| 24 | Oberseite | | |
| 25 | Labyrinthnut | | |
| 26 | Randbereich | | |
| 27 | Labyrinthvorsprung | | |
| 28 | Labyrinthspalt | | |
| 29 | äußere Wand | | |
| 30 | Flanke | | |

## Patentansprüche

1. Anschlagpunkt zum Festlegen an einem festzulegenden oder handzuhabenden Gegenstand, umfassend ein ein Anschlussmittel aufweisendes Unterteil (2) zum Anschließen des Anschlagpunktes (1) an einem festzulegenden oder handzuhabenden Gegenstand, **dadurch gekennzeichnet, dass** das Unterteil (2) eine Lagerbuchse (17) aufweist und dass der Anschlagpunkt (1) ein gegenüber dem Unterteil (2) drehbares, mit einem Lagerabschnitt (18) in die Lagerbuchse (17) des Unterteils (2) eingreifendes Oberteil (3) umfasst, bei welchem Anschlagpunkt (1) das Oberteil (3) mit seinem radial äußeren Randbereich (26) die Oberseite des Unterteils (2) überkragt und zwischen dem das Unterteil (2) übergreifenden Randbereich (26) des Oberteils (3) und dem Unterteil (2) eine Labyrinthdichtung durch einen am Oberteil (3) angeformten, in eine unterteilseitige Labyrinthnut (25) eingreifenden Labyrinthvorsprung (27) ausgebildet ist, wobei zumindest die in radialer Richtung nach außen weisende Wand (29) der Labyrinthnut (25) und die komplementäre, in radialer Richtung nach innen weisende Flanke (30) des Labyrinthvorsprunges (27) in denjenigen Abschnitten ihrer Ineingriffstellung komplementär zueinander gekrümmt sind, in denen die beiden Teile - Oberteil (3) und Unterteil (2) - bei einer Querlastbeanspruchung des Anschlagpunktes (1) infolge einer Kippung des Oberteils (3) gegenüber dem Unterteil (2) miteinander in Kontakt treten können.

2. Anschlagpunkt nach Anspruch 1, **dadurch gekennzeichnet, dass** in dem möglichen Kontaktbereich der Labyrinthdichtungspartner (25, 27) der Labyrinthvorsprung (27) konvex und die Labyrinthnut (25) konkav gekrümmt sind.

3. Anschlagpunkt nach Anspruch 1 oder 2, **dadurch gekennzeichnet, dass** der Krümmungsradius des konvex ausgeführten Labyrinthdichtungspartners in dem möglichen Kontaktbereich mit einem geringfügig größeren Radius ausgeführt ist.

4. Anschlagpunkt nach Anspruch 2 oder 3, **dadurch gekennzeichnet, dass** im Wesentlichen der gesamte Labyrinthvorsprung (27) konvex und im Wesentlichen die Labyrinthnut (25) konkav, jeweils in Bezug auf ihre Querschnittsfläche gekrümmt sind.

5. Anschlagpunkt nach Anspruch 4, **dadurch gekennzeichnet, dass** die Krümmungen über ihre Erstreckung mit konstantem Radius ausgeführt sind.

6. Anschlagpunkt nach einem der Ansprüche 1 bis 5, **dadurch gekennzeichnet, dass** der in die Lagerbuchse (17) des Unterteils (2) eingreifende Lagerabschnitt (18) des Oberteils (3) an der Sohle der Lagerbuchse (17) über ein Lager (22) abgestützt ist.

7. Anschlagpunkt nach Anspruch 6, **dadurch gekennzeichnet, dass** es sich bei dem Lager um ein Wälzlager (22) mit mehreren sternförmig mit radialem Abstand zur Drehachse (D) des Oberteils (3) angeordneten Wälzkörpern (23) handelt.

8. Anschlagpunkt nach Anspruch 7, **dadurch gekennzeichnet, dass** die Wälzkörper (23) in einem Wälzkörperlagerkäfig gehalten sind.

9. Anschlagpunkt nach Anspruch 7 oder 8, **dadurch gekennzeichnet, dass** die Wälzkörper Zylinderkörper (23) sind und das Wälzlager somit ein Nadellager (22) ist.

10. Anschlagpunkt nach Anspruch 6, **dadurch gekennzeichnet, dass** das Lager ein Gleitlager mit einer Lagerscheibe ist, die zwischen der Sohle der Lagerbuchse und der Stirnseite des Lagerabschnittes des Oberteils angeordnet ist.

11. Anschlagpunkt nach einem der Ansprüche 6 bis 10, **dadurch gekennzeichnet, dass** zentrisch zu dem Lager (22) eine Stützkugel (20) angeordnet ist, auf der der Lagerabschnitt (18) des Oberteils (3) aufsitzt.

12. Anschlagpunkt nach einem der Ansprüche 1 bis 11, **dadurch gekennzeichnet, dass** das Oberteil (3) an der Mantelfläche seines in die Lagerbuchse (17) des Unterteils (2) eingreifenden Lagerabschnitts (18) gegenüber der Innenwandung der Lagerbuchse (17) des Unterteils (2) durch ein Wälzlager gelagert ist.

13. Anschlagpunkt nach Anspruch 11, **dadurch gekennzeichnet, dass** die Lagerkörper des Wälzlagers Kugeln (19) sind.

## Claims

1. Contact point for securing to an object to be secured or handled, comprising a lower part (2) having a connection means for connecting the attachment point (1) to an object to be secured or handled, **characterised in that** the lower part (2) has a bearing bush (17), and that the attachment point (1) comprises an upper part (3) that can be rotated relative to the lower part (2) and engaging into the bearing bush (17) of the lower part (2) with a bearing section (18), wherein, in the said attachment point (1), the upper part (3) extends over the upper side of the lower part (2) with its radially outer edge region (26), and a labyrinth seal is formed between the edge region (26) of the upper part (3), engaging over the lower part (2), and the lower part (2), by a labyrinth protrusion (27) formed on the upper part (3) and engaging into a lower-part (2) labyrinth groove (25), wherein at least the wall (29) of the labyrinth groove (25) pointing outwards in the radial direction, and the complementary side (30) of the labyrinth protrusion (27) pointing inwards in the radial direction, are curved in a complementary manner to one another in the sections where they are engaged, where the two parts - the upper part (3) and the lower part (2) - can be brought into contact with one another due to a tilting of the upper part (3) relative to the lower part (2), with a transverse loading of the attachment point (1).

2. Contact point according to claim 1, **characterised in that**, in the possible contact region of the labyrinth seal partners (25, 27), the labyrinth protrusion (27) is cambered convex and the labyrinth groove (25) is cambered concave.

3. Contact point according to claim 1 or 2, **characterised in that** the camber radius of the convex configured labyrinth seal partner is configured with a slightly greater radius in the possible contact region.

4. Contact point according to claim 2 or 3, **characterised in that** essentially the whole labyrinth protrusion (27) is cambered convex, and essentially the labyrinth groove (25) is configured concave, in each case in relation to their cross-section surface.

5. Contact point according to claim 4, **characterised in that** the cambering is configured with a constant radius over its whole extension.

6. Contact point according to any one of claims 1 to 5, **characterised in that** the bearing section (18) of the upper part (3), engaging into the bearing bush (17) of the lower part (2), is supported at the base of the bearing bush (17) by means of a bearing (22).

7. Contact point according to claim 6, **characterised in that** the bearing is a roller bearing (22) with a plurality of star-shaped rolling elements (23) arranged with a radial distance interval to the axis of rotation (D) of the upper part (3).

8. Contact point according to claim 7, **characterised in that** the rolling elements (23) are held in a rolling element bearing cage.

9. Contact point according to claim 7 or 8, **characterised in that** the rolling elements are cylindrical elements (23), and the roller bearing is therefore a needle bearing (22).

10. Contact point according to claim 6, **characterised in that** the bearing is a slide bearing with a bearing disk, which is arranged between the base of the bearing bush and the face side of the bearing section of the upper part.

11. Contact point according to any one of claims 6 to 10, **characterised in that** a support sphere (20) is arranged centrically to the bearing (22), on which the bearing section (18) of the upper part (3) is located.

12. Contact point according to any one of claims 1 to 11, **characterised in that** the upper part (3) is mounted by a roller bearing on the casing surface of its bearing section (18) engaging into the bearing bush (17) of the lower part (2), opposite the inner wall of the bearing bush (17) of the lower part (2).

13. Contact point according to claim 11, **characterised in that** the bearing elements of the roller bearing are spheres (19).

## Revendications

1. Point d'attache destiné à être fixé à un objet à fixer ou à manipuler, comprenant une embase (2) présentant un moyen de raccordement afin de raccorder le point d'attache (1) à un objet à fixer ou à manipuler, **caractérisé en ce que** l'embase (2) présente un coussinet (17) et que le point d'attache (1) comprend une pièce supérieure (3), rotative par rapport à l'embase (2), s'engageant par un tronçon de palier (18) dans le coussinet (17) de l'embase (2), pour lequel point d'attache (1) la pièce supérieure (3) surplombe, par son bord (26) externe radial, la face supérieure de l'embase (2) et pour lequel un joint labyrinthe est configuré entre le bord (26) de la pièce supérieure (3) en prise sur l'embase (2) et l'embase (2), grâce à une saillie labyrinthe (27) moulée sur la pièce supérieure (3), engagée dans une rainure labyrinthe (25) côté embase ; au moins la paroi (29) de la rainure labyrinthe (25), orientée dans le sens radial vers l'extérieur, et le flanc (30) complémentaire de la saillie labyrinthe (27), orienté dans le sens radial vers l'intérieur, étant courbés l'un vers l'autre de manière complémentaire au niveau des tronçons assurant leur position d'engagement, par lesquels les deux pièces - la pièce supérieure (3) et l'embase (2) - peuvent entrer en contact l'une avec l'autre lors d'une sollicitation du point d'attache (1) par une charge appliquée transversalement, à la suite d'un basculement de la pièce supérieure (3) par rapport à l'embase (2).

2. Point d'attache selon la revendication 1, **caractérisé en ce que,** dans la zone de contact possible des pièces complémentaires d'étanchéité du joint labyrinthe (25, 27), la saillie labyrinthe (27) est courbée de manière convexe et la rainure labyrinthe (25), de manière concave.

3. Point d'attache selon la revendication 1 ou 2, **caractérisé en ce que** le rayon de courbure de la pièce complémentaire d'étanchéité du joint labyrinthe, configurée de manière convexe, est réalisé avec un rayon légèrement plus grand au niveau de la zone de contact possible.

4. Point d'attache selon la revendication 2 ou 3, **caractérisé en ce que** sensiblement l'ensemble de la saillie labyrinthe (27) et sensiblement la rainure labyrinthe (25) sont courbés respectivement de manière convexe et concave, chacun par rapport à la superficie de leur section transversale.

5. Point d'attache selon la revendication 4, **caractérisé en ce que** les courbures son réalisées sur toute leur étendue avec un rayon constant.

6. Point d'attache selon l'une des revendications 1 à 5, **caractérisé en ce que** le tronçon de palier (18) de la pièce supérieure (3) s'engageant dans le coussinet (17) de l'embase (2) est en appui, à la base du coussinet (17) sur un palier (22).

7. Point d'attache selon la revendication 6, **caractérisé en ce que** le palier est un roulement (22) avec plusieurs éléments de roulement (23) disposés en étoile avec un intervalle radial par rapport à l'axe de rotation (D) de la pièce supérieure (3).

8. Point d'attache selon la revendication 7, **caractérisé en ce que** les éléments de roulement (23) sont maintenus dans une cage de roulement.

9. Point d'attache selon la revendication 7 ou 8, **caractérisé en ce que** les corps de roulement sont des cylindres (23) et le palier est donc un roulement à aiguilles (22).

10. Point d'attache selon la revendication 6, **caractérisé en ce que** le palier est un palier lisse avec un disque de palier disposé entre la base du coussinet et la face frontale du tronçon de palier de la pièce supérieure.

11. Point d'attache selon l'une des revendications 6 à 10, **caractérisé en ce qu'**une bille d'appui (20) est disposée au centre du palier (22), sur laquelle le tronçon de palier (18) de la pièce supérieure (3) est en appui.

12. Point d'attache selon l'une des revendications 1 à 11, **caractérisé en ce que** la pièce supérieure (3) est logée par un roulement contre la surface d'enveloppe de son tronçon de palier (18) s'engageant dans le coussinet (17) de l'embase (2), en face de la paroi intérieure du coussinet (17) de l'embase (2).

13. Point d'attache selon la revendication 11, **caractérisé en ce que** les éléments de roulement sont des billes (19).
